# EUROPÄISCHE PATENTSCHRIFT

(11) **EP 0 524 565 B1**
(45) Veröffentlichungstag und Bekanntmachung des Hinweises auf die Patenterteilung: **11.06.1997**
(21) Anmeldenummer: 92112321.2
(22) Anmeldetag: 18.07.1992
(51) Int. Cl.: B09B 3/00

(54) **Verfahren und Vorrichtung zur Homogenisierung und Kompaktierung von Reststoffen**
Method and device for homogenizing and densifying refuse
Procédé et dispositif pour homogénéiser et densifier des résidus

(30) Priorität: 22.07.1991 DE 4124694; 15.07.1992 DE 4223027
(43) Veröffentlichungstag der Anmeldung: 27.01.1993
(73) Patentinhaber: NOELL Abfall- und Energietechnik GmbH, D-41464 Neuss (DE)
(72) Erfinder: Röckelein, Michael, W-6120 Vielbrunn/Michelstadt (DE); Grünanger, Gerhart, W-8751 Heimbuchenthal (DE); Weis, Otto, W-8702 Oberpleichfeld (DE)
(74) Vertreter: Köckeritz, Günter

(56) Entgegenhaltungen:
- EP-A- 0 401 409
- BE-A- 1 001 597
- DE-C- 576 519
- DE-C- 678 072
- US-A- 1 845 369
- Umwelt 7-8/1987,S. 408-411, 'Grünabfälle mobil kompostieren'

## Beschreibung

Die Erfindung betrifft ein Verfahren und eine Vorrichtung zur Homogenisierung und Kompaktierung von unterschiedlichen Reststoffen. Unter Reststoffen werden Abfallstoffe der unterschiedlichsten Art, wie beispielsweise Haus-, und/oder Sperr- und/oder Gewerbemüll, und/oder Klärschlamm und/oder ähnliche Materialien verstanden.

Zur Zeit werden Abfälle der obengenannten Art mit Fahrzeugen auf Deponien abgekippt und mit Kompaktoren verteilt und verdichtet. Die Verdichtung erfolgt dabei durch mehrmaliges Überfahren. Die Bodenpressung ist dabei dem lockeren Abfall angepaßt, um ein Einsinken des Fahrzeuges zu verhindern. Ein Vermischen von verschiedenartigen Abfällen findet dabei nicht statt.

Aus der Zeitschrift "Umwelt" 7-8/1987 Seiten 408-411, Grünabfälle mobil Kompostieren ist ein Verfahren zur mobilen Kompostierung von sortenreinen Grünabfällen bekannt. Das Verfahren ist jedoch nicht geeignet, unterschiedlichste Reststoffe der eingangs genannten Art zu homogenisieren und zu verdichten und mittels eines deponiegängigen Fahrzeuges eine definierte Aufschüttung zu Tafelmieten zum Zweck der biologischen Weiterbehandlung des Abfalls vorzunehmen.

Aus der BE-A-10 01 597 ist eine Einrichtung zum Vermengen und Behandeln von Abfallstoffen bekannt, wobei die Stichfestigkeit der umzuschlagenden Stoffe durch Zugabe von Zuschlagstoffen wie Zement, Kalk, Hochofenschlacke und Flugasche erhöht wird. Die Einrichtung besteht aus einem wannenförmigen Teil und einem verschließbaren Mantelteil, wobei an der Trommel selbst Mittel vorgesehen sind, um die Trommel in ihrer Längsachse in Rotation zu bringen. Die an der Innenseite der Trommel vorgesehenen Zähne sollen das Mischen fördern. Das wannenförmige Unterteil ist so ausgebildet, daß damit ein Aufschöpfen der Abfall- und Zuschlagstoffe möglich ist.
Die in der BE-A-10 01 597 beschriebene Vorrichtung ist nicht geeignet, Reststoffe der unterschiedlichsten und eingangs beschriebenen Art gemeinsam zu mischen bzw. eine definierte Aufschüttung zu Tafelmieten zum Zwecke der biologischen Weiterbehandlung der Reststoffe vorzunehmen. Auch eine Zumischung von Prozeßwässern oder Flüssigklärschlämmen läßt die dort beschriebene Einrichtung nicht zu.

Aus der EP-A-401 409 ist ein Verfahren zur Beseitigung von Klärschlamm bekannt, nachdem Klärschlamm und dgl. gemeinsam mit Hausmüll und dgl. festen Abfällen von Müllsammelfahrzeugen mit einem eine Mischeinrichtung umfassenden behälterförmigen Müllsammelaufbau aufgenommen und zu einem Zielort, z.B einer Verbrennungsanlage, transportiert wird, wobei dem Müllsammelaufbau des Fahrzeuges vor Erreichen des Zielortes, d.h. wärend der Müllsammeltour eine Menge des Schlammes zugegeben wird. Das beschriebene Verfahren geht nicht auf die Zusammensetzung der unterschiedlichen Reststoffe ein, wodurch bezüglich der durch das Verfahren zu erreichenden Homogenität und Kompaktivität der Reststoffe nicht unerhebliche Einbußen entstehen können.

Aus der DE-C-678 072 ist ein Müllwagen bekannt, dessen Müllbehälter eine langgestreckte, zylindrische Trommel bildet, die um ihre Längsachse drehbar auf einem Fahrzeuguntergestell gelagert ist und in ihrem Innenraum fest mit dem Trommelmantel verbundene schraubenförmige Förderbleche enthält und der Trommeldeckelaufbau aus einem Deckelrahmen und einem Deckel besteht, der im Trommeldeckelaufbau über Rollenelemente gelagert ist. Die beschriebene Vorrichtung erreicht durch die fehlende Neigbarkeit der Trommel nicht die volle Ausnutzung des Homogenisierungs- und Kompaktierungsvorganges. Die Deckelkonstruktion ist für eine Entleerung der Trommel an Kippkanten hinderlich. Außerdem ist bei der Entleerung der Trommel eine definierte Aufschüttung des behandelten Gutes nicht möglich.

Der Erfindung liegt die Aufgabe zugrunde, ein Verfahren und eine Vorrichtung zu entwickeln, wonach Reststoffe der unterschiedlichsten Art, insbesondere Haus-, und/oder Sperr- und/oder Gewerbemüll und/oder Klärschlamm und dergleichen weitgehend vergleichmäßigt werden können, wodurch die Dichte der Reststoffe erhöht wird und dadurch wiederum eine Kapazitätserhöhung der Deponie erreicht werden kann. Im Fall der thermischen Weiterbehandlung der unterschiedlichen Reststoffe soll eine Verbesserung des Ausbrandes und eine Vergleichmäßigung der Feuerungsführung erreicht werden.

Erfindungsgemäß wird die Aufgabe dadurch gelöst, daß die unterschiedlichen Reststoffe einer mobilen Drehtrommel zugeführt werden, die auch während des Füllens gedreht werden kann. Durch Vermischen der Füllung über einen längeren Zeitraum wird eine weitgehende Vergleichmäßigung der Reststoffe erreicht. Das Mischen der Reststoffe erfolgt in Abhängigkeit von der Zusammensetzung bei unterschiedlicher Neigung der Drehtrommel, vorzugsweise in einem Bereich von - 10° bis 45 °, wobei die verschiedenartigen Reststoffe zerkleinert, aufgefasert, homogenisiert und kompaktiert werden. Durch Drehen der Trommel in Schräglage wird in der Trommel bei gleichzeitigem kontinuierlichen Transport eine Zerkleinerung mit einhergehender Kompaktierung erreicht, wodurch eine wesentliche Reduzierung des Reststoffvolumens erzielt wird.

Ein bevorzugtes Merkmal der Erfindung besteht darin, daß den zur biologischen Weiterbehandlung vorgesehenen Reststoffen Flüssigklärschlamm, Müllsickerwasser oder andere Prozeßwässer während der Drehbewegung der Trommel zugemischt werden können. Dadurch wird die biologische Aktivität der Reststoffe erhöht, wodurch sich die Zeiten für die biologische Behandlung verkürzen. Weiterhin werden weniger Flächen für die biologische Behandlung erforderlich. Ein weiterer Vorteil der Zumischung von Flüssigklärschlamm und/oder Prozeßwässern besteht darin, daß dadurch dem Papierflug, der Staubentwicklung sowie der Gefahr von Deponiebränden begegnet werden kann.

Die erfindungsgemäße Vorrichtung zur Durchführung des oben beschriebenen Verfahrens besteht aus einem mobilen Fahrzeugrahmen, auf dem sich eine dreh- und kippbar gelagerte Homogenisierungstrommel befindet. Die mit einem festen Boden ausgestattete zylindrische Trommel ist mit innenliegenden Transport- und Leiteinrichtungen versehen. Dadurch wird erreicht, daß eine restlose funktionsstörungsfreie Entleerung und volle Ausnutzung des Homogenisierungsvorganges über den gesamten Querschnitt der Trommel durchgeführt werden kann. Die transportable Ausführung der Homogenisierungstrommel ermöglicht eine direkte definierte Aufschüttung zu beispielsweise Tafelmieten zwecks biologischer Weiterbehandlung der Reststoffe im Gegensatz zu den bisher bekannten Müllfahrzeugen, die auf Rottedeponien nicht fahrbar sind. Dadurch sind vorteilhafterweise die bisher eingesetzten Fahrzeuge zum Entladen und Verteilen nicht mehr erforderlich.

Ein bevorzugtes Merkmal der Erfindung besteht darin, daß der Trommeldeckelaufbau aus einem stehenden Deckelrahmen und einem mit der Homogenisierungstrommel drehenden Deckel besteht, wobei der Deckel im Trommeldeckelaufbau über Rollelemente gelagert ist. Die spezielle Deckelkonstruktion der Homogenisierungstrommel ermöglicht es, daß die Trommel bis an Kippkanten von Laderampen herangefahren werden kann, wodurch die Übergabe der Reststoffe ohne zusätzliche Einrichtungen erfolgen kann.

Ein weiteres bevorzugtes Merkmal der Erfindung besteht darin, daß die Homogenisierungstrommel zum Füllen bis auf 45° geschwenkt und gedreht werden kann, wodurch ein Füllgrad bis zu 90 % erreicht wird.

Ein anderes bevorzugtes Merkmal der Erfindung besteht darin, daß der Trommeldeckel mit einer umlaufenden chemisch-beständigen Dichtung versehen ist, wodurch die Abdichtung in jeder Trommellage erfolgen kann. Nach einem weiteren Merkmal der Erfindung ist der Trommeldeckel mit Düsen versehen, wodurch eine Einspeisung von Flüssigklärschlamm und/oder Prozeßwässer in die Homogenisierungstrommel erfolgen kann.

Die Erfindung soll nachstehend anhand eines Ausführungsbeispiels näher erläutert werden.

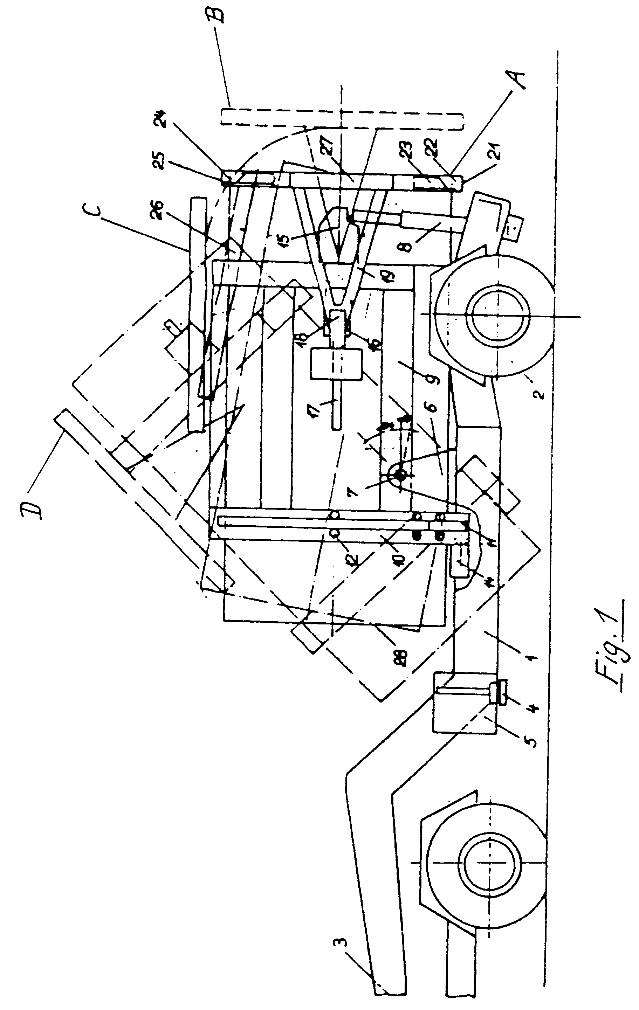

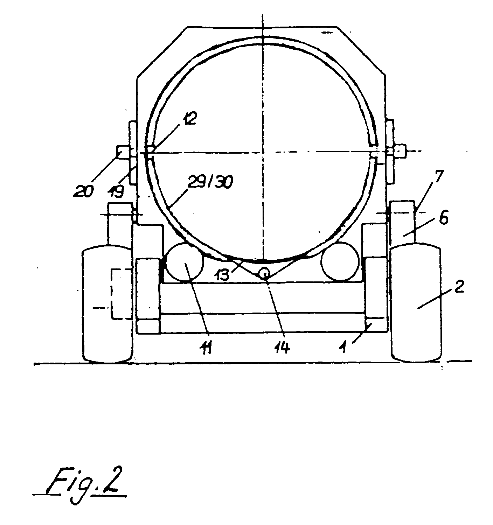

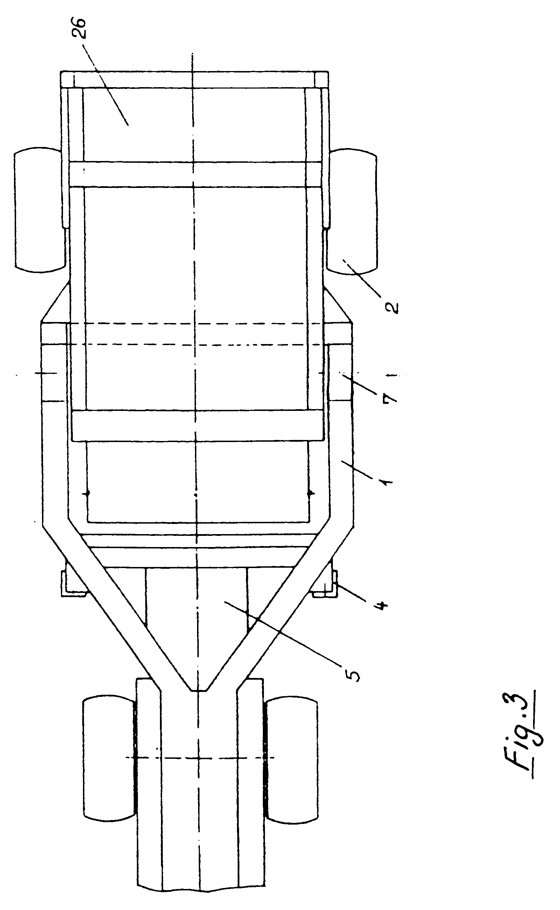

Die Zeichnung zeigt in Figur 1 bis 3 die mobile Homogenisierungstrommel in verschiedenen Ansichten.

### Ausführungsbeispiel

Die auf Deponien und in thermischen Behandlungsanlagen eingesetzte Homogenisierungstrommel besteht im wesentlichen aus einem Fahrzeugrahmen 1 mit Bereifung 2, einem Königszapfen 3 zum Andocken an ein Schleppfahrzeug, einer Fahrzeugabstützung 4 und einem dieselhydraulischen Antriebsaggregat 5 zum Bewegen der Homogenisierungstrommel. Auf dem Fahrzeugrahmen 1 ist der Trommellagerbock 6 mit dem Drehlager 7 und einem mehrstufigen Hydraulikzylinder 8 angeordnet. Im Drehlager 7 ist der Trommelkipprahmen 9 gelagert. Der Trommelkipprahmen 9 besteht aus einer schmutzgeschützten Trommellagerung 10 mit vertikalen 11 und horizontalen 12 Trommelkraft-Ableitungselementen einer Trommel-Antriebskette 13, einem Hydraulik-Antrieb 14 und einem Angriffspunkt 15 für den mehrstufigen Hydraulikzylinder 8 sowie der Trommeldeckel-Verschiebeeinrichtung 16 mit Hydraulikzylinder 17, der Deckellagerung 18 und der Deckelkippeinrichtung 19 mit Hydraulikantrieb 20. Der Trommeldeckelaufbau 21 besteht aus dem stehenden Deckelrahmen 22 und dem mit der Abfalltrommel 26 drehenden Deckel 23. Der Deckel 23 ist im Trommeldeckelaufbau 21 über Rollelemente 24 gelagert und mit einer Dichtung 25 zur Abfalltrommel 26 abgedichtet. In der Mitte des Deckels 23 sind Düsen 27 für das Prozeßwasser und/oder Flüssigklärschlamm angeordnet. Die Abfalltrommel 26 mit festem drehbaren Boden 28 ist mit einer Förderschnecke 29 und Leitblechen 30 zur Reststoffbehandlung ausgestattet.

Haus-, Sperr- und Gewerbemüll wird auf einer Rampe von Müll- und Containerfahrzeugen abgekippt. Schadstoffe bzw. für den Verfahrensablauf ungeeignete, nicht deponiefähige Stoffe werden auf der Kippfläche visuell gesichtet und aussortiert. Zum Befüllen der Trommel wird die Trommel um ca. 45° nach oben geschwenkt und danach der stirnseitig angeordnete Deckel geöffnet. In die komplett freie Öffnung kann z. B. über eine Rutsche der Müll eingefüllt werden. Die Reststoffarten können z. B. auch mit einem Radlader in die verfahrbare Homogenisierungstrommel transportiert werden.

Die Figur 1 zeigt die Deckelpositionen bei unterschiedlicher Stellung der Homogenisierungstrommel. Die Position A zeigt die Abfalltrommel 26 mit geschlossener Deckeleinrichtung. Zum Öffnen wird der Trommeldeckelaufbau 21 über die Trommeldeckel-Verschiebeeinrichtung 16 mit dem Hydraulikzylinder 17 in die Position B (gestrichelte Darstellung) gebracht. Mit Hilfe der Deckelkippeinrichtung 19 mit Hydraulikantrieb 20 kann der Trommeldeckelaufbau 21 nun in die Position C gefahren werden. Die so geöffnete Abfalltrommel 26 ermöglicht durch Einstellung von 45° Neigung eine Füllung bis zu 90 %. Die Position D zeigt in gestrichelter Darstellung die geneigte Abfalltrommel 26 und den mit Hilfe der Deckelkippeinrichtung 19 verschobenen Trommeldeckelaufbau 21.

Bereits während der Befüllung der Trommel beginnt der Homogenisierungsvorgang.
Über eine Dosierstelle wird zwecks Einstellung der Feuchte für eine biologische Weiterbehandlung der Reststoffe Müllsickerwasser in die Trommel geleitet. Über die Kippkante der Rampe kann weiterhin mit beispielsweise einem Radlader kommunaler Klärschlamm aus Entwässerungseinrichtungen zugegeben werden.

Nach Befüllung der Trommel und Schließen des Deckels wird diese mit einem geeigneten Zugfahrzeug von der Kippkante abgezogen, um eine leere Trommel für die weitere Befüllung bereitzustellen. Die befüllte Trommel wird vom Zugfahrzeug abgehängt, und die Reststoffe werden - in Abhängigkeit von ihrer Zusammensetzung - ein bis drei Stunden, vorzugsweise 2 Stunden, bei einer Neigung der Trommel von ca. 0° bis -10° und einer Drehzahl von ca. 4 U/min homogenisiert. Durch diesen Vorgang wird das Reststoffvolumen bis zu ca. 50 % reduziert. Durch die Neigung der Trommel und den in der Trommel angeordneten Transport- 29 und Leiteinrichtungen 30, die eventuell mit Zähnen versehen sind, wird der Müll gegen die feste Trommelstirnwand gefördert, steigt hoch und wird an der Oberseite zurückgefördert. Durch diese Bewegung des Mülls werden die verschiedenen Reststoffe zerkleinert, aufgefasert und homogenisiert. Nach Homogenisierung der Abfälle werden diese entweder sofort auf eine Verdichtungsdeponie gebracht oder einer biologischen Behandlung zugeführt. Für den Transport der Homogenisierungstrommel zur Deponie wird die Trommel in 0°-Stellung gefahren. Zum Entleeren wird die Trommel gegenläufig gefahren. Zu dem Zweck wird die verfahrbare Trommel an das Zugfahrzeug angekoppelt. Das Gespann fährt an der aufzuschichtenden, belüftbaren Rottemiete entlang und baut diese mit entsprechenden Hilfseinrichtungen in Abhängigkeit von der Fahrzeuggeschwindigkeit und der Neigung der Trommel in der Höhe auf.
Durch die Homogenisierung der Abfälle und die Zugabe von Klärschlamm wird die Rottezeit verkürzt, so daß weniger Rottefläche bereitgestellt werden muß.

Nach erfolgter biologischer Behandlung werden die gerotteten Abfälle mit einem Radlader in verfahrbare Großraummulden geladen, wobei zuvor die Brennstofffraktion bei ca. 40 mm abgesiebt werden kann und dann der thermischen Behandlung zugeführt wird. Das Zugfahrzeug wird an die Mulden angekoppelt. Das Gespann fährt die biologisch vorbehandelten Abfälle zur Ablagerung auf dem Deponiestandort. Dort werden sie abgekippt, von einem Kompaktor dünnschichtig (20 bis 30 cm) verteilt und durch mehrfaches Überfahren kompaktiert.

Durch den Einsatz des erfindungsgemäßen Homogenisierungsverfahrens kann in Abhängigkeit von der Müllzusammensetzung in Verbindung mit einer einfachen biologischen Behandlung nahezu doppelt soviel Abfall in vorhandenem Deponieraum eingearbeitet werden, als es beim sofortigen Mülleinbau möglich wäre. Die homogenisierten Reststoffe können aber auch in einer Müllverbrennungsanlage verbrannt werden.

## Patentansprüche

1. Verfahren zur Homogenisierung und Kompaktierung von zur biologischen oder thermischen Weiterbehandlung vorgesehenen Reststoffen, insbesondere Haus-, und/oder Sperr- und/oder Gewerbemüll, und/oder Klärschlamm und/oder ähnlichen Materialien, wobei die unterschiedlichen Reststoffe einer mobilen auch während des Füllens drehbaren Trommel zugeführt werden, dadurch gekennzeichnet,
daß die Reststoffe in Abhängigkeit von ihrer Zusammensetzung bei unterschiedlichen Neigungen der Drehtrommel, vorzugsweise von -10° bis 45° mit unterschiedlichen Drehzahlen und Mischzeiten gemischt, zerkleinert, aufgefasert, homogenisiert und kompaktiert werden.

2. Verfahren nach Anspruch 1, dadurch gekennzeichnet, daß den zur biologischen Weiterbehandlung vorgesehenen Reststoffen während der Drehbewegung Flüssigklärschlamm und/oder Prozeßwässer zur Erhöhung der biologischen Aktivität zugemischt werden.

3. Vorrichtung zur Durchführung des Verfahrens nach den Ansprüchen 1 und 2, bestehend aus einer auf einem mobilen Fahrzeugrahmen gelagerten drehbaren Homogenisierungstrommel, wobei die mit einem festen Boden ausgestattete zylindrische Trommel mit innen liegenden Transport- und Leiteinrichtungen versehen ist und der Trommeldeckelaufbau aus einem Deckelrahmen und einem Deckel besteht, der im Trommeldeckelaufbau über Rollelemente gelagert ist, dadurch gekennzeichnet,
daß die drehbare zylindrische Homogenisierungstrommel (26) kippbar gelagert ist und der Trommeldeckelaufbau (21) aus einem stehenden Deckelrahmen (22) und einem mit der Homogenisierungstrommel (26) drehenden Deckel (23) besteht.

4. Vorrichtung nach Anspruch 3, dadurch gekennzeichnet,
daß die Homogensierungstrommel (26) zum Füllen bis 45° geschwenkt und gedreht werden kann, wodurch ein Füllgrad bis zu 90 % erreicht wird.

5. Vorrichtung nach den Ansprüchen 3 und 4, dadurch gekennzeichnet,
daß der Trommeldeckel (23) mit einer umlaufenden chemisch beständigen Dichtung (25) und mit Düsen (27) für die Einspeisung von Flüssigklärschlamm und/oder Prozeßwässern versehen ist.

## Claims

1. Method of homogenising and compacting residual substances intended for further biological or thermal treatment, more especially domestic refuse and/or bulky refuse and/or industrial refuse, and/or clarified sludge and/or similar materials, the various residual substances being supplied to a mobile drum, which is also rotatable during the filling operation, characterised in that,
depending on their composition, the residual substances are mixed at variable speeds and mixing times with various inclinations of the rotatable drum, preferably from -10° to 45°, comminuted, separated into fibres, homogenised and compacted.

2. Method according to claim 1, characterised in that liquid clarified sludge and/or process waters are admixed with the residual substances, which are intended for further biological treatment, during the rotational movement in order to increase the biological activity.

3. Apparatus for accomplishing the method according to claims 1 and 2, comprising a rotatable homogenising drum which is mounted on a mobile vehicle frame, the cylindrical drum being fitted with a fixed base and being provided with internally situated conveying and guiding arrangements, and the drum cover structure comprising a cover frame and a cover, which is mounted in the drum cover structure via rolling elements, characterised in that the rotatable, cylindrical homogenising drum (26) is tiltably mounted, and the drum cover structure (21) comprises a vertical cover frame (22) and a cover (23), which rotates with the homogenising drum (26).

4. Apparatus according to claim 3, characterised in that the homogenising drum (26) can be pivoted and rotated up to 45° for the filling operation, whereby a degree of filling up to 90 % is achieved.

5. Apparatus according to claims 3 and 4, characterised in that the drum cover (23) is provided with a circumferential, chemically resistant seal (25) and with nozzles (27) for feeding-in liquid clarified sludge and/or process waters.

## Revendications

1. Procédé pour homogénéiser et densifier des résidus destinés à un traitement ultérieur biologique ou thermique, en particulier des déchets ménagers et/ou des déchets encombrants et/ou des déchets industriels, et/ou des boues de curage et/ou des matières similaires, selon lequel les résidus divers sont acheminés dans un tambour mobile qui tourne également pendant le remplissage,
caractérisé en ce que les résidus sont mélangés, broyés, défibrés, homogénéisés et densifiés en fonction de leur composition, avec des inclinaisons différentes du tambour rotatif, de préférence de -10° à 45° , avec des vitesses de rotation et des temps de mélange différents.

2. Procédé selon la revendication 1, caractérisé en ce que des boues de curage liquides et/ou des effluents aqueux de processus industriels sont ajoutés pendant la rotation du tambour aux résidus destinés à un traitement ultérieur biologique, pour stimuler l'activité biologique.

3. Dispositif pour la mise en oeuvre du procédé selon les revendications 1 et 2, constitué d'un tambour d'homogénéisation rotatif monté sur un châssis mobile de véhicule automobile, le tambour cylindrique équipé d'un fond non-détachable étant muni d'équipements de transport et de guidage internes, et la structure du couvercle du tambour étant constituée d'un châssis de couvercle et d'un couvercle, qui est monté dans la structure de couvercle de tambour par l'intermédiaire d'éléments de roulement, caractérisé en ce que le tambour d'homogénéisation rotatif cylindrique (26) est monté de façon à pouvoir basculer et en ce que la structure de couvercle de tambour (21) se compose d'un châssis de couvercle (22) et d'un couvercle (23) qui tourne avec le tambour d'homogénéisation (26).

4. Dispositif selon la revendication 3, caractérisé en ce que le tambour d'homogénéisation (26) peut pivoter et tourner d'une amplitude pouvant aller jusque 45°, pour être rempli, ce qui assure un taux de remplissage pouvant atteindre 90 %.

5. Dispositif selon les revendications 3 et 4, caractérisé en ce que le couvercle de tambour (23) est muni d'un joint périphérique (25) résistant aux acides et de buses (27) pour alimenter des boues de curage liquides et/ou des effluents aqueux de processus industriels.
